# EUROPÄISCHE PATENTSCHRIFT

(11) **EP 1 667 297 B1**
(45) Veröffentlichungstag und Bekanntmachung des Hinweises auf die Patenterteilung: **18.11.2009**
(21) Anmeldenummer: 05020646.5
(22) Anmeldetag: 22.09.2005
(51) Int. Cl.: H02G 3/06, F16L 41/02, F16L 47/32

(54) **Verbindungsvorrichtung für Schutzschläuche**
Connecting device for protective tubing
Dispositif de raccordement pour tuyaux de protection

(30) Priorität: 01.12.2004 DE 102004058097
(43) Veröffentlichungstag der Anmeldung: 07.06.2006
(73) Patentinhaber: Murrplastik Systemtechnik GmbH, 71570 Oppenweiler (DE)
(72) Erfinder:
(74) Vertreter: Reule, Hanspeter

(56) Entgegenhaltungen:
- FR-A- 795 813
- GB-A- 570 130

## Beschreibung

Die Erfindung betrifft eine Verbindungsvorrichtung für Schutzschläuche gemäß Oberbegriff des Anspruchs 1.

Bekannte Verbindungsvorrichtungen (FR 795 813 A) weisen einen Verbindungskörper auf, durch den sich ein Verbindungskanal erstreckt. Der Verbindungskörper weist zwei oder mehr Einführöffnungen zum Einführen von Wellschläuchen in den Verbindungskanal auf, an denen Mittel zum Fixieren der Wellschläuche angeordnet sind, die als abnehmbare Schlauchverschraubungen ausgebildet sind. Eine Verbindungsvorrichtung mit zwei Einführöffnungen dient als Schlauchverbinder zur Verbindung zweier Wellschläuche, eine Verbindungsvorrichtung mit drei oder mehr Einführöffnungen dient als Schlauchverteiler, wobei die in einem ersten Wellschlauch geführten Leitungen auf zwei oder mehr Ausgangswellschläuche verteilt werden. Die bekannten Schlauchverteiler bzw. Schlauchverbinder legen jedoch die Längsachsen der Wellschläuche in ihrer Orientierung zueinander fest.

Es ist daher Aufgabe der Erfindung, eine Verbindungsvorrichtung der eingangs genannten Art derart weiterzubilden, dass die Orientierung der Schläuche, also ihre Austrittsrichtung, besser an die äußeren Gegebenheiten angepasst werden kann.

Die Aufgabe wird erfindungsgemäß durch eine Verbindungsvorrichtung mit den Merkmalen des Patentanspruchs 1 gelöst. Vorteilhafte Ausgestaltungen der Erfindung sind Gegenstand der abhängigen Ansprüche.

Der Erfindung liegt der Gedanke zugrunde, dass die Gewindebuchse fest in den Verbindungskörper eingeschraubt werden kann, während der Grundkörper der Verschraubungseinrichtung gegen die Gewindebuchse, und damit gegen den Verbindungskörper, drehbar ist. Dadurch lässt sich eine Vielzahl von Orientierungen der Längsachsen zweier Schläuche zueinander erzielen. Es ist besonders vorteilhaft, wenn eine solche Verschraubungseinrichtung an allen Einführöffnungen angebracht wird.

Es wird bevorzugt, dass der Verbindungskörper drei Einführöffnungen aufweist und dass der Verbindungskanal die Form eines Y oder eines T aufweist. Bei einer solchen Verbindungsvorrichtung, die als Schlauchverteiler eingesetzt wird, bei der die in einem Eingangsschlauch geführten Leitungen auf zwei Ausgangsschläuche verteilt werden, ist es besonders vorteilhaft, wenn die Orientierung der Schlauchlängsachsen an den Einführöffnungen variiert werden kann. Insbesondere dann, wenn die Mittelpartie um etwa 45° abgewinkelt ist, lässt sich ein Y-Verteiler durch einfache Handgriffe in einen T-Verteiler umwandeln, wobei dessen 90°-Winkel aus zwei 45°-Winkeln besteht und die durch den so erhaltenen T-Verteiler geführten Leitungen mit einem größeren Krümmungsradius gebogen sind als Leitungen, die durch einen herkömmlichen T-Verteiler geführt sind und um 90° gebogen werden. Dadurch werden die Leitungen weniger beansprucht.

Zweckmäßig weist der Verbindungskörper an mindestens einer der Einführöffnungen, vorzugsweise an allen Einführöffnungen, ein Innengewinde auf, wobei die Verschraubungseinrichtung ein zum Innengewinde komplementäres Außengewinde aufweist. Dies ergibt eine stabile und leicht lösbare Schraubverbindung zwischen dem Verbindungskörper und der Verschraubungseinrichtung bzw. den Verschraubungseinrichtungen. Es wird bevorzugt, dass der Verbindungskanal eine lichte Weite aufweist, die mindestens gleich der lichten Weite der Schläuche ist. Dadurch wird erreicht, dass im Verbindungskanal alle in den Schläuchen geführten Leitungen aufgenommen werden können.

Zweckmäßig weist die Verschraubungseinrichtung an ihrem Grundkörper an dessen zweitem Ende Rastvorsprünge zum Hintergreifen der Gewindebuchse auf, und der Grundkörper weist anschließend an die Rastvorsprünge über eine der Länge der Gewindebuchse entsprechende Länge eine zylindrische Außenkontur auf, die der Innenkontur der Gewindebuchse entspricht. Bevorzugt weist die Verschraubungseinrichtung an ihrem Grundkörper eine seinem zweiten Ende zugewandte Anschlagfläche für die Gewindebuchse auf, und der Grundkörper weist von seinem zweiten Ende ausgehende Längsschlitze auf, deren Länge kleiner ist als der Abstand der Anschlagfläche vom zweiten Ende. Die Gewindebuchse ist dann austauschbar und dennoch sicher auf dem Grundkörper angebracht, wobei aufgrund der Längsschlitze das die Rastvorsprünge tragende zweite Ende besser zum Aufbringen und Entfernen der Gewindebuchse zusammengedrückt werden kann.

Eine Verschraubungseinrichtung der oben genannten Art ist beispielhaft in der deutschen Patentanmeldung mit dem Aktenzeichen 103 38 542.8 beschrieben, auf die hiermit ausdrücklich Bezug genommen wird und deren Offenbarungsgehalt in den Offenbarungsgehalt der vorliegenden Anmeldung einbezogen wird.

Im Folgenden wird die Erfindung anhand von in der Zeichnung schematisch dargestellten Ausführungsbeispielen näher erläutert. Es zeigen
- Fig. 1: einen Verbindungskörper mit drei Einführöffnungen im Schnitt;
- Fig. 2: eine Verschraubungseinrichtung zum Einsetzen in den Verbindungskörper gemäß Fig. 1 im Schnitt;
- Fig. 3 und Fig. 4: eine Verbindungsvorrichtung für drei Wellschläuche mit unterschiedlich ausgerichteten Verschraubungseinrichtungen gemäß einem ersten Ausführungsbeispiel und
- Fig. 5: eine Verbindungsvorrichtung für zwei Wellschläuche gemäß einem zweiten Ausführungsbeispiel.

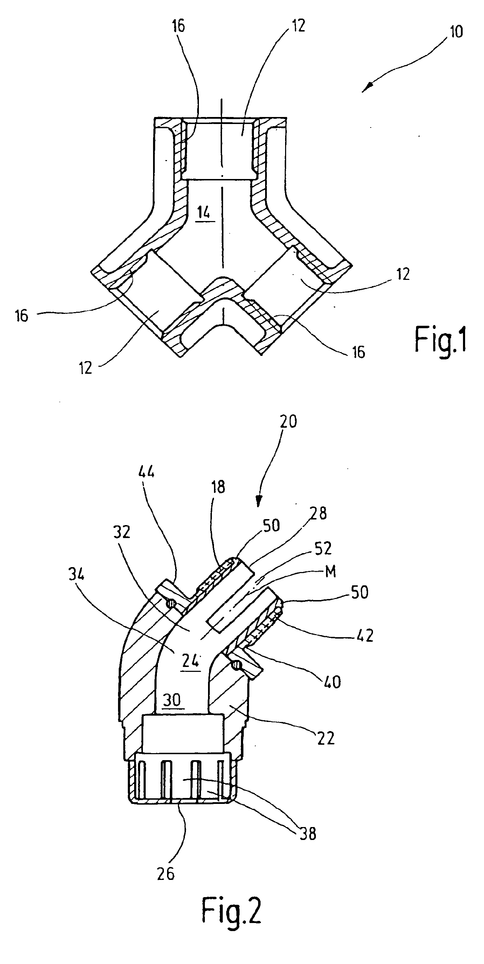

Ein Verbindungskörper 10 gemäß Fig. 1 weist drei Einführöffnungen 12 für Leitungen auf, die durch einen durch den Verbindungskörper 10 verlaufenden Verbindungskanal 14 miteinander verbunden sind. Der Verbindungskanal 14 weist die Form eines Y auf. An den Einführöffnungen 12 weist der Verbindungskörper 10 an seiner Innenfläche jeweils ein Innengewinde 16 auf, das sich ein Stück weit entlang des Verbindungskanals 14 erstreckt. Das Innengewinde 16 dient der Aufnahme einer mit einem Außengewinde 18 versehenen Verschraubungseinrichtung 20.

Die Verschraubungseinrichtung 20 zum Einschrauben in den Verbindungskörper 10 (Fig. 2) weist einen als Spritzgussteil aus Kunststoff gefertigten Grundkörper 22 auf, durch den sich ein Durchgangskanal 24 von einer Eingangsöffnung 26 an seinem ersten Ende bis zu einer Ausgangsöffnung 28 an seinem zweiten Ende erstreckt. Der Durchgangskanal 24 weist zwei gerade Partien 30, 32 auf, die sich von den Enden ausgehend erstrecken, und eine zwischen den geraden Partien 30, 32 liegende, abgewinkelte Mittelpartie 34. In die Eingangsöffnung 26 kann ein Wellschlauch eingeführt werden, in dem Kabel oder andere Leitungen aufgenommen sind. Zur Fixierung des Wellschlauchs an der Verschraubungseinrichtung 20 weist diese an ihrem ersten Ende Befestigungsmittel 38 zum Befestigen des Wellschlauchs auf.

Am zweiten Ende des Grundkörpers 22 ist auf diesem eine ihn umgreifende Gewindebuchse 40 angeordnet. Die Gewindebuchse 40 ist aus Metall gefertigt und weist einen Zylinder 42 mit dem Außengewinde 18 und eine am Zylinder 42 angeformte Platte 44 auf. Die Platte 44 liegt mit einer Anlagefläche an einer Anschlagfläche des Grundkörpers 22 an. Am zweiten Ende weist der Grundkörper 22 Rastvorsprünge 50 auf, die die Gewindebuchse 40 hintergreifen und sie mit ihrer Anlagefläche an die Anschlagfläche anliegend halten. Damit ist die Gewindebuchse 40 in axialer Richtung gegenüber dem Grundkörper 22 lagefixiert. An die Rastvorsprünge 50 anschließend weist der Grundkörper 22 über eine Länge, die der Länge der Gewindebuchse 40 entspricht, eine zylindrische Außenkontur auf. Diese Außenkontur entspricht der Innenkontur der Gewindebuchse 40, so dass die Gewindebuchse 40 gegenüber dem Grundkörper 22 um eine Mittelachse M der vom zweiten Ende ausgehenden geraden Partie 32 des Durchgangskanals 24 drehbar ist. Das Außengewinde 18 ist komplementär zum Innengewinde 16 des Verbindungskörpers 10 ausgeführt, so dass die Verschraubungseinrichtung 20 in den Verbindungskörper 10 eingeschraubt werden kann. Um das Aufsetzen der Gewindebuchse 40 auf den Grundkörper 22 beim Zusammenbau der Verschraubungseinrichtung 20 zu erleichtern, weist der Grundkörper 22 von seinem zweiten Ende ausgehende Längsschlitze 52 auf. Deren Länge ist kleiner als der Abstand der Anschlagfläche vom zweiten Ende des Grundkörpers 22. Dadurch kann das zweite Ende zum Aufsetzen der Gewindebuchse 40 zusammengedrückt werden.

Die Verschraubungseinrichtung 20 gemäß Fig. 2 weist einen Durchgangskanal 24 mit einem im Winkel von 45° abgewinkelten Verlauf auf. Es sind jedoch auch andere Abwinkelungen möglich. Insbesondere eine Ausführung des Grundkörpers 22 mit gerade verlaufendem Durchgangskanal ist möglich.

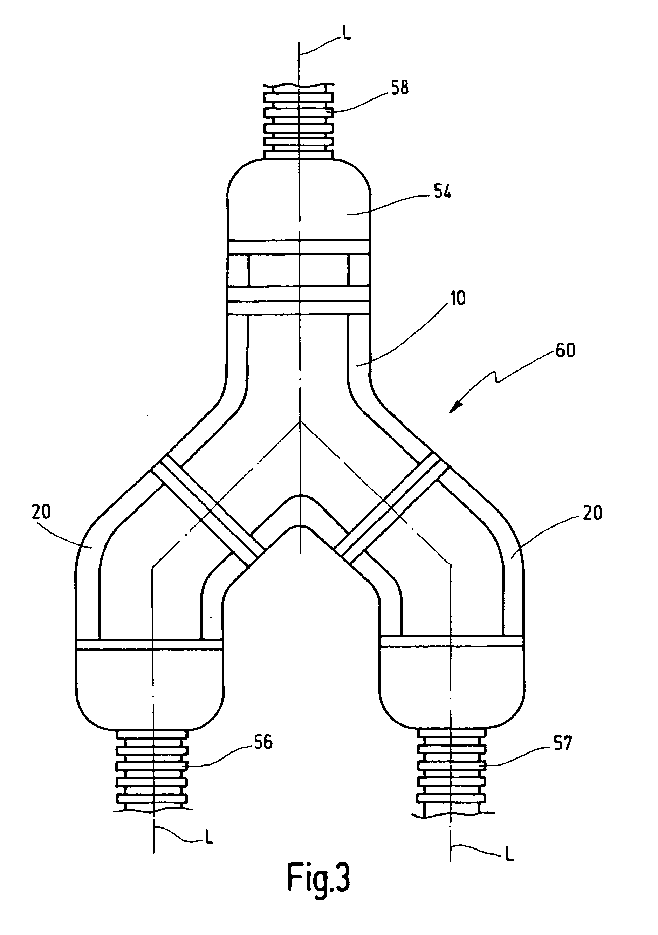

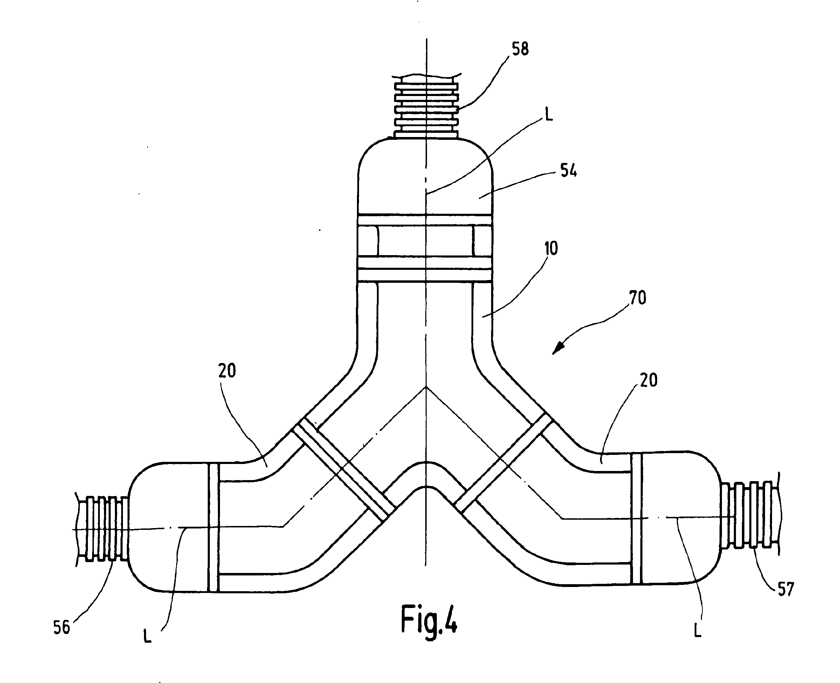

Eine Verbindungsvorrichtung 60, 70 gemäß Fig. 3 und 4 ist aus einem Verbindungskörper 10 gemäß Fig. 1 sowie zwei Verschraubungseinrichtungen 20 gemäß Fig. 2 und einer dritten Verschraubungseinrichtung 54 mit gerade verlaufendem Durchgangskanal zusammengesetzt. Die dritte Verschraubungseinrichtung 54 braucht dabei keine Gewindebuchse aufzuweisen, sondern kann an ihrem Grundkörper mit einem Außengewinde zum Einschrauben in den Verbindungskörper versehen sein. Die in Fig. 3 und 4 gezeigten Verbindungsvorrichtungen 60, 70 dienen dazu, drei Wellschläuche 56, 57, 58 zu verbinden. Ein erster und ein zweiter Wellschlauch 56, 57 sind mit ihren Enden in den Verschraubungseinrichtungen 20 mit abgewinkeltem Durchgangskanal fixiert. Die in ihnen geführten Leitungen werden im Verbindungskanal 14 zusammengeführt und von einem dritten Wellschlauch 58 aufgenommen, der mit seinem Ende in der dritten Verschraubungseinrichtung 54 fixiert ist. Die lichte Weite des Verbindungskanals 14 ist dabei mindestens so groß wie die lichte Weite jedes der Wellschläuche 56, 57, 58. Durch die Drehbarkeit der Grundkörper 22 der Verschraubungseinrichtungen 20 mit abgewinkeltem Durchgangskanal um deren in den Verbindungskörper 10 fest eingeschraubte Gewindebuchse lässt sich die Orientierung der Längsachsen L der Wellschläuche 56, 57, 58 zueinander variieren. Während in Fig. 3 alle Wellschläuche 56, 57, 58 zueinander parallel verlaufen, verlaufen der erste und der zweite Wellschlauch 56, 57 gemäß Fig. 4 in einem rechten Winkel zum dritten Wellschlauch 58. Der Y-Verteiler gemäß Fig. 3 lässt sich somit durch einfache Handgriffe in einen T-Verteiler gemäß Fig. 4 umwandeln, wobei dessen 90°-Winkel aus zwei 45°-Winkeln besteht und die durch den T-Verteiler geführten Leitungen mit einem größeren Krümmungsradius gebogen sind als Leitungen, die durch einen herkömmlichen T-Verteiler geführt sind und um 90° gebogen werden.

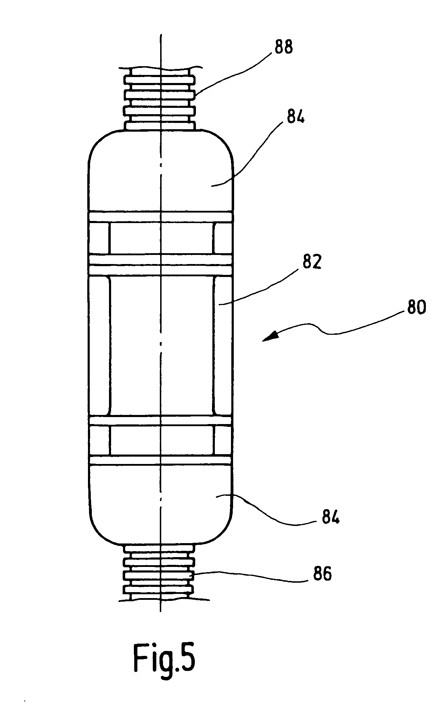

Die Verbindungsvorrichtung 80 gemäß Fig. 5 weist einen Verbindungskörper 82 mit nur zwei Einführöffnungen auf. In dem Verbindungskörper 82 verläuft ein gerader Verbindungskanal. In die Einführöffnungen sind Verschraubungseinrichtungen 84 eingeschraubt, die ebenfalls einen geraden Durchgangskanal aufweisen. Die beiden durch die Verbindungsvorrichtung 80 verbundenen Wellschläuche 86, 88 liegen somit auf einer Achse.

Es versteht sich von selbst, dass bei beiden Ausführungsbeispielen die Verschraubungseinrichtungen durch Verschraubungseinrichtungen anderer Geometrie ersetzt werden können. Dadurch kann die jeweilige Verbindungsvorrichtung gut an unterschiedliche räumliche Gegebenheiten angepasst werden.

Zusammenfassend ist folgendes festzuhalten: Die Erfindung betrifft eine Verbindungsvorrichtung für Schutzschläuche 56, 57, 58; 86, 88, insbesondere für Wellschläuche, mit einem Verbindungskörper 10; 82, der einen Verbindungskanal 14 und mindestens zwei Einführöffnungen 12 zum Einführen von in den Schläuchen 56, 57, 58; 86, 88 geführten Leitungen in den Verbindungskanal 14 aufweist. Erfindungsgemäß ist vorgesehen, dass an mindestens einer der Einführöffnungen 12 eine Verschraubungseinrichtung 20, 54; 84 zur Aufnahme und zur Klemmverbindung der Schläuche 56, 57, 58; 86, 88 lösbar am Verbindungskörper 10; 82 befestigt ist.

## Patentansprüche

1. Verbindungsvorrichtung für Schutzschläuche (56, 57, 58; 86, 88), insbesondere für Wellschläuche, mit einem Verbindungskörper (10;82), der einen Verbindungskanal (14) und mindestens zwei Einführöffnungen (12) zum Einführen von in den Schläuchen (56, 57, 58; 86, 88) geführten Leitungen in den Verbindungskanal (14) aufweist, wobei an mindestens einer der Einführöffnungen (12) eine Verschraubungseinrichtung (20, 54; 84) zur Aufnahme und zur Klemmverbindung der Schläuche (56, 57, 58; 86, 88) lösbar am Verbindungskörper (10; 82) befestigt ist, **dadurch gekennzeichnet, dass** die Verschraubungseinrichtung (20) einen Grundkörper (22) aufweist, der zwischen einer Eingangsöffnung (26) an seinem ersten Ende und einer Ausgangsöffnung (28) an seinem zweiten Ende einen Durchgangskanal (24) aufweist, der zwischen von den Enden des Grundkörpers ausgehenden geraden Partien (30, 32) eine insbesondere im Winkel von 45° abgewinkelte Mittelpartie (34) aufweist und dass an der Verschraubungseinrichtung (20) an ihrem zweiten Ende eine den Grundkörper (22) umgreifende Gewindebuchse (40) befestigt ist, die ein Außengewinde (18) zum Einschrauben in den Verbindungskörper (10) aufweist und die um eine Längsachse (M) der geraden Partie (32) am zweiten Ende drehbar ist und in axialer Richtung lagefixiert ist.

2. Verbindungsvorrichtung nach Anspruch 1, **dadurch gekennzeichnet, dass** der Verbindungskörper (10) drei Einführöffnungen (12) aufweist und dass der Verbindungskanal (14) die Form eines Y oder eines T aufweist.

3. Verbindungsvorrichtung nach Anspruch 1 oder 2, **dadurch gekennzeichnet, dass** der Verbindungskörper (10; 82) an mindestens einer der Einführöffnungen (12) ein Innengewinde (16) aufweist und dass die Verschraubungseinrichtung (20, 54; 84) ein zum Innengewinde (16) komplementäres Außengewinde (18) aufweist.

4. Verbindungsvorrichtung nach einem der vorangehenden Ansprüche, **dadurch gekennzeichnet, dass** der Verbindungskanal (14) eine lichte Weite aufweist, die mindestens gleich der lichten Weite der Schläuche (56, 57, 58; 86, 88) ist.

5. Verbindungsvorrichtung nach einem der vorangehenden Ansprüche, **dadurch gekennzeichnet, dass** die Verschraubungseinrichtung (20) an ihrem Grundkörper (22) an dessen zweitem Ende Rastvorsprünge (50) zum Hintergreifen der Gewindebuchse (40) aufweist, und dass der Grundkörper (22) anschließend an die Rastvorsprünge (50) über eine der Länge der Gewindebuchse (40) entsprechende Länge eine zylindrische Außenkontur aufweist, die der Innenkontur der Gewindebuchse (40) entspricht.

6. Verbindungsvorrichtung nach einem der vorangehenden Ansprüche, **dadurch gekennzeichnet, dass** die Verschraubungseinrichtung (20) an ihrem Grundkörper (22) eine seinem zweiten Ende zugewandte Anschlagfläche für die Gewindebuchse (40) aufweist, wobei der Grundkörper (22) von seinem zweiten Ende ausgehende Längsschlitze (52) aufweist, deren Länge kleiner ist als der Abstand der Anschlagfläche vom zweiten Ende.

## Claims

1. Connection device for protective hoses (56, 57, 58; 86, 88), in particular for corrugated hoses, with a connection body (10;82), which has a connection channel (14) and at least two inlet apertures (12) for the introduction of lines guided in the hoses (56, 57, 58; 86, 88) into the connection channel (14), wherein a screw device (20, 54; 84) for the accommodation and clamp connection of the hoses (56, 57, 58; 86, 88) is secured in a detachable manner to the connection body (10; 82) at at least one of the inlet apertures (12), **characterised in that** the screw device (20) has a base body (22) which has a passage channel (24) between an inlet aperture (26) at its first end and an outlet aperture (28) at its second end, which passage channel has a middle part (34), angled in particular at an angle of 45°, between straight parts (30, 32) extending from the ends of the base body, and that a threaded sleeve (40) encompassing the base body (22) is secured to the screw device (20) at its second end, which threaded sleeve has an outer thread (18) for screwing into the connection body (10) and which is rotatable about a longitudinal axis (M) of the straight part (32) at the second end and is of fixed position in the axial direction.

2. Connection device according to Claim 1, **characterised in that** the connection body (10) has three inlet apertures (12) and that the connection channel (14) has the shape of a Y or a T.

3. Connection device according to Claim 1 or 2, **characterised in that** the connection body (10; 82) has an inner thread (16) at at least one of the inlet apertures (12), and that the screw device (20, 54; 84) has an outer thread (18) complementary to the inner thread (16).

4. Connection device according to one of the preceding claims, **characterised in that** the connection channel (14) has a clear width which is at least equal to the dear width of the hoses (56, 57, 58; 86, 88).

5. Connection device according to one of the preceding claims, **characterised in that** the screw device (20) has on its base body (22), at the second end, engagement projections (50) for engaging behind the threaded sleeve (40), and that the base body (22), adjoining the engagement projections (50), has a cylindrical outer contour over a length which corresponds to the length of the threaded sleeve (40), which outer contour corresponds to the inner contour of the threaded sleeve (40).

6. Connection device according to one of the preceding claims, **characterised in that** the screw device (20) has on its base body (22) a contact surface, facing its second end, for the threaded sleeve (40), wherein the base body (22) has longitudinal slots (52) extending from its second end, the length of which slots being less than the distance interval of the contact surface from the second end.

## Revendications

1. Dispositif de raccordement pour des tuyaux de protection (56, 57, 58 ; 86, 88), en particulier pour des tuyaux ondulés, avec un corps de raccordement (10 ; 82) qui présente un canal de raccordement (14) et au moins deux ouvertures d'introduction (12) pour introduire dans le canal de raccordement (14) des conduites dirigées dans les tuyaux (56, 57, 58 ; 86, 88), sachant qu'au niveau d'au moins une des ouvertures d'introduction (12), un organe de vissage (20, 54 ; 84) est fixé de manière amovible sur le corps de raccordement (10 ; 82) pour recevoir et pour raccorder avec serrage les tuyaux (56, 57, 58 ; 86, 88), **caractérisé en ce que** l'organe de vissage (20) présente un corps de base (22) qui présente lui-même, entre une ouverture d'entrée (26) à sa première extrémité et une ouverture de sortie (28) à sa seconde extrémité, un canal de passage (24) qui présente, entre des parties rectilignes (30, 32) partant des extrémités du corps de base, une partie centrale (34) coudée notamment sous un angle de 45°, et **en ce qu'**une douille filetée (40) s'engageant autour du corps de base (22) est fixée sur l'organe de vissage (20) à sa seconde extrémité, douille qui présente un filetage extérieur (18) pour la visser dans le corps de raccordement (10), et qui est rotative autour d'un axe longitudinal (M) de la partie rectiligne (32) à la seconde extrémité, et est fixée en position en direction axiale.

2. Dispositif de raccordement selon la revendication 1, **caractérisé en ce que** le corps de raccordement (10) présente trois ouvertures d'introduction (12), et **en ce que** le canal de raccordement (14) présente la forme d'un Y ou d'un T.

3. Dispositif de raccordement selon la revendication 1 ou 2, **caractérisé en ce que** le corps de raccordement (10 ; 82) présente un filetage intérieur (16) au niveau d'au moins une des ouvertures d'introduction (12), et **en ce que** l'organe de vissage (20, 54 ; 84) présente un filetage extérieur (18) complémentaire du filetage intérieur (16).

4. Dispositif de raccordement selon l'une des revendications précédentes, **caractérisé en ce que** le canal de raccordement (14) présente une largeur de passage qui est au moins égale à la largeur de passage des tuyaux (56, 57, 58 ; 86, 88).

5. Dispositif de raccordement selon l'une des revendications précédentes, **caractérisé en ce que** l'organe de vissage (20) présente sur son corps de base (22), à sa seconde extrémité, des saillies de crantage (50) pour s'engager derrière la douille filetée (40), et **en ce que** le corps de base (22) présente à la suite des saillies de crantage (50), sur une longueur correspondant à la longueur de la douille filetée (40), un contour extérieur cylindrique qui correspond au contour intérieur de la douille filetée (40).

6. Dispositif de raccordement selon l'une des revendications précédentes, **caractérisé en ce que** l'organe de vissage (20) présente sur son corps de base (22) une face de butée, tournée vers sa seconde extrémité, pour la douille filetée (40), sachant que le corps de base (22) présente des fentes longitudinales (52) partant de sa seconde extrémité, fentes dont la longueur est inférieure à la distance entre la face de butée et la seconde extrémité.
